Europäisches Patentamt

European Patent Office

Office européen des brevets

(11) Publication number: **0 184 860 B1**

# EUROPEAN PATENT SPECIFICATION

(45) Date of publication of patent specification: **11.04.90**

(51) Int. Cl.⁵: **H 02 K 29/08, H 02 P 6/02**

(21) Application number: **85115939.2**

(22) Date of filing: **13.12.85**

(54) AC signal generating apparatus.

(30) Priority: **14.12.84 JP 262701/84**

(43) Date of publication of application:
**18.06.86 Bulletin 86/25**

(45) Publication of the grant of the patent:
**11.04.90 Bulletin 90/15**

(84) Designated Contracting States:
**DE FR GB**

(56) References cited:
**DE-A-2 915 987**
**JP-A-57 034 791**
**US-A-4 354 145**

(73) Proprietor: **HITACHI, LTD.**
**6, Kanda Surugadai 4-chome Chiyoda-ku**
**Tokyo (JP)**

(72) Inventor: **Okawa, Tadashi**
**39-6-403, Narashinodai-5-chome**
**Funabashi-shi (JP)**
Inventor: **Tomita, Hiroyuki**
**3-81-2, Takanedai-2-chome**
**Funabashi-shi (JP)**
Inventor: **Yahara, Masataka**
**16-19, Sakushindai-1-chome**
**Chiba-shi (JP)**
Inventor: **Muramatsu, Masaharu**
**984-188, Wakamatsucho**
**Chiba-shi (JP)**
Inventor: **Kobayashi, Sumio**
**39-1-204, Narashinodai-5-chome**
**Funabashi-shi (JP)**
Inventor: **Sugai, Hiroshi**
**204-127, Jo**
**Sakura-shi (JP)**
Inventor: **Ninomiya, Hisakazu**
**39-4-201, Narashinodai-5-chome**
**Funabashi-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

The present invention relates to an AC signal generating apparatus for generating an AC signal as a rotary magnetic pole member rotates, and in particular to an AC signal generating apparatus suitable to detection of a magnetic pole position in control of a brushless DC motor.

An AC servomotor comprising a brushless DC motor must detect the U, V and W phases of the magnetic pole position. (However, one of the U, V and W phase can be omitted to be detected since it can be calculated from two other phases by using an expression W=−(U+V), for example).

In one of methods for detecting the magnetic pole position, a magnet coupled to the motor shaft directly or via a coupling, for example, is provided and the magnetic flux is detected by Hall devices or search coils.

This magnet is magnetized at positions corresponding to those of the magnetic poles of the motor.

On the basis of the detected magnetic pole position signal, the current phase and magnitude of the servomotor in each of the U and V phases are determined.

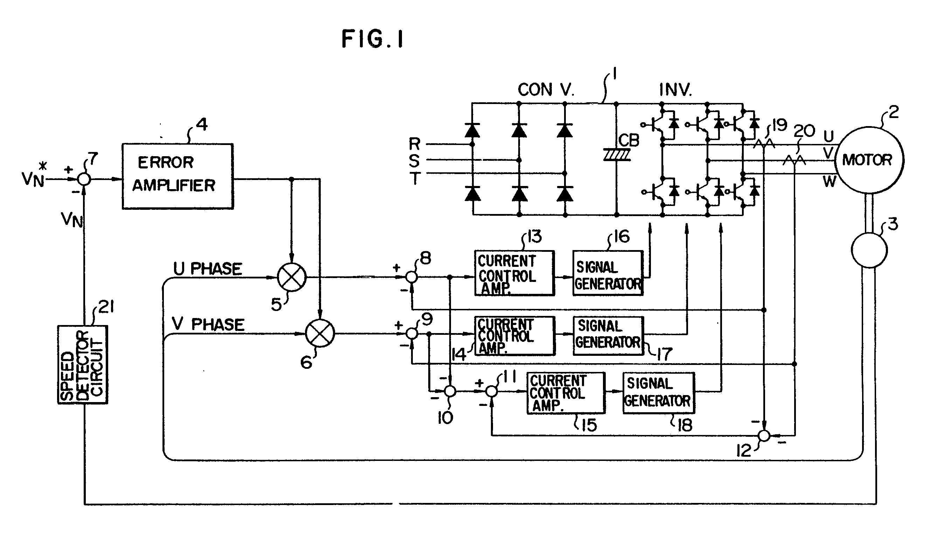

Fig. 1 shows an example of a control circuit used for an AC servomotor of the prior art.

The control circuits of Fig. 1 includes a main circuit of the servomotor controller 1, a servomotor 2, an encoder 3 which is an AC signal generating apparatus, an error amplifier 4, multipliers 5 and 6, comparator circuits 7 to 12, current control amplifiers 13 to 15, PWM signal generators 16 to 18, current detectors 19 and 20, and a speed detector circuit 21.

A speed command signal $V_N^*$ and a speed signal $V_N$ fed from the encoder 3 are supplied to the comparator circuit 7 to yield the difference between them. The difference is amplified by the error amplifier 4. The output of the error amplifier 4 is multiplied with magnetic pole position detection signals U and V in the multipliers 5 and 6, respectively. The multipliers 5 and 6 send out current command signals of the U phase and V phase, respectively.

The signals detected by the current detectors 19 and 20 are compared respectively in the comparator circuits 8 and 9, amplified respectively by current control amplifiers 13 and 14, converted into PWM waveforms respectively by the PWM signal generators 16 and 17, and applied to the servomotor control main circuit 1 as transistor base signals. For the W phase, the outputs of comparator circuits 8 and 9 are combined to produce a W phase signal in the comparator circuit 10. In addition, the current detection signals from the current detectors 19 and 20 are combined to produce the current detection signal of the W, phase in the comparator circuit 12. The outputs of comparator circuits 10 and 12 are applied to the comparator circuit 11 to produce their difference. In the same way as the U and V phases, the output of the comparator circuit 11 is supplied to the servomotor controller main circuit 1 via the current control amplifier 15 and the PWM signal generator 18 as the transistor base signal. These signals let flow currents successively through the stator windings of the motor 2 to control the AC servomotor in accordance with the speed commands.

As shown in this example, the W phase is obtained by combining the U phase and the V phase. This method is frequently used since neither the W phase current detector, nor W phase detection signal wiring from the encoder, nor the W phase multiplier is required.

The U phase detection signal and the V phase detection signal of the servomotor are obtained by detecting the magnetic flux of the magnet magnetized for detecting the magnetic pole position. However, it is comparatively difficult to magnetize the magnet so that the sinusoidal output may so produced. Eventually the peak portion is deformed to contain harmonics as much as several % to ten plus several %. Most of the harmonics comprise the third harmonics.

DE—A—2 915 987 discloses a three phase encoder whereby the three voltage signals are summed and divided by three in order to determine the D.C. component of the voltage signals and this D.C. component is subtracted from each voltage signal. To approximate a sinusoidal waveform provided by the voltage signals the rim of rotary disks which is scanned by inductive sensors disposed around the disks are suitably shaped. But said publication discloses no processing of the signals in order to diminish the third harmonic component.

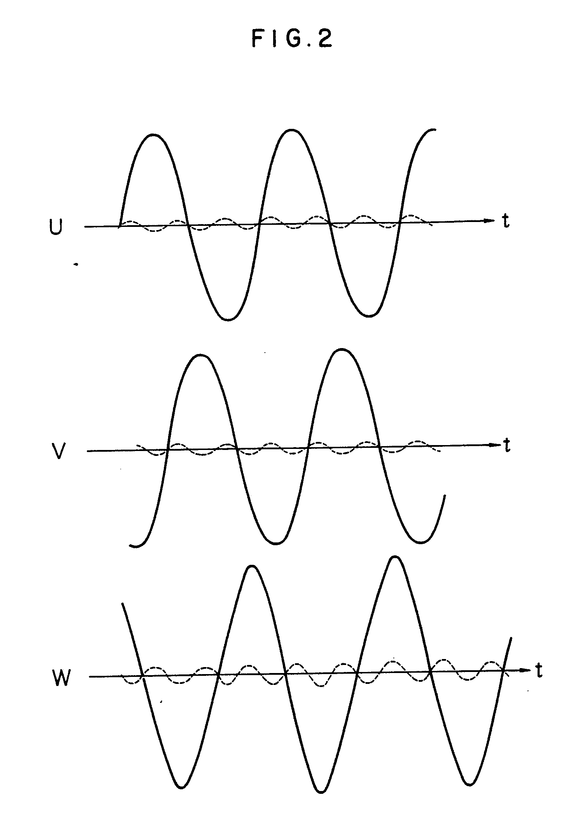

In case of the method whereby the W phase is obtained by combining the U phase and V phase, the third harmonics assume the same phase in the U phase and V phase. Accordingly, the W phase contains twice as much as the third harmonic of each of the U phase and the V phase. Fig. 2 concretely shows the magnetic pole position detection waveforms of the U, V and W phases. The U phase and V phase contain the third harmonics having the same phase as indicated by broken lines. The W phase is obtained by combining the U phase and the V phase as

$$W=-(U+V).$$

Accordingly, the third harmonic contained in the W phase is twice in amplitude and opposite in polarity as compared with each of the U phase and the V phase as represented by a broken line of the W phase.

While the U phase and the V phase have similar waveforms, the waveform of the W phase is large in amplitude and is similar to triangular waves.

Since the current commands are produced on the basis of the magnetic pole position detection signals of the U, V and W phases, the W phase has a large current peak value. This results in a drawback that the current flowing through the transistor used in the servomotor controller becomes unreasonably large. In addition, torque pulsation is incurred from the third harmonic flowing through the servomotor.

An object of the present invention is to provide an AC signal generating apparatus wherein the third harmonic contained in the magnetic pole position detection signal is minimized.

As evident from Fig. 2, the third harmonic contained in the U, V and W phases have the same phase. Therefore, the third haromonic can be eliminated by deriving the difference between outputs of two phases. Further, only the third harmonic can be extracted by adding outputs of the three phases. By subtracting the third harmonic from each phase output, therefore, it is possible obtain an output free from the third harmonic or containing a smaller quantity of the third harmonic. When the output V is used with respect to the output U, the third harmonic contained in the output V has a phase difference π with respect to that contained in the output U. By adding the outputs of the two phases U and V, therefore, it is possible to obtain an output which does not contain the third harmonic or which contains only a small quantity of the third harmonic.

The present invention is based upon such a principle and is disclosed in claim 1.

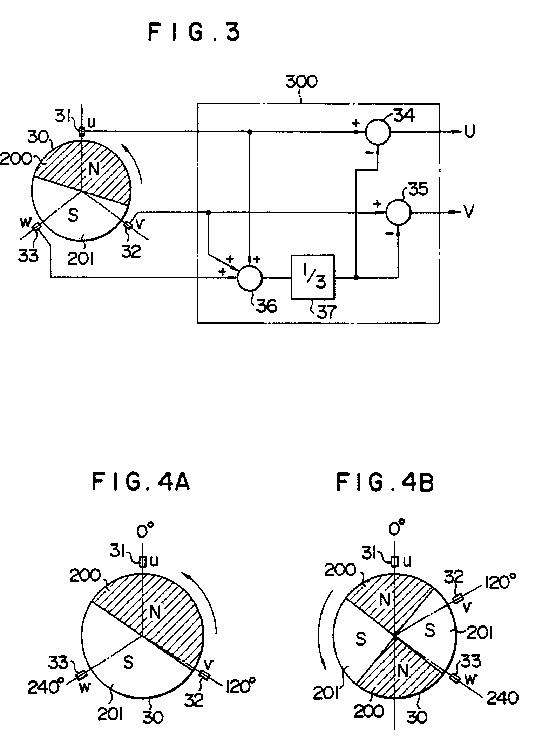

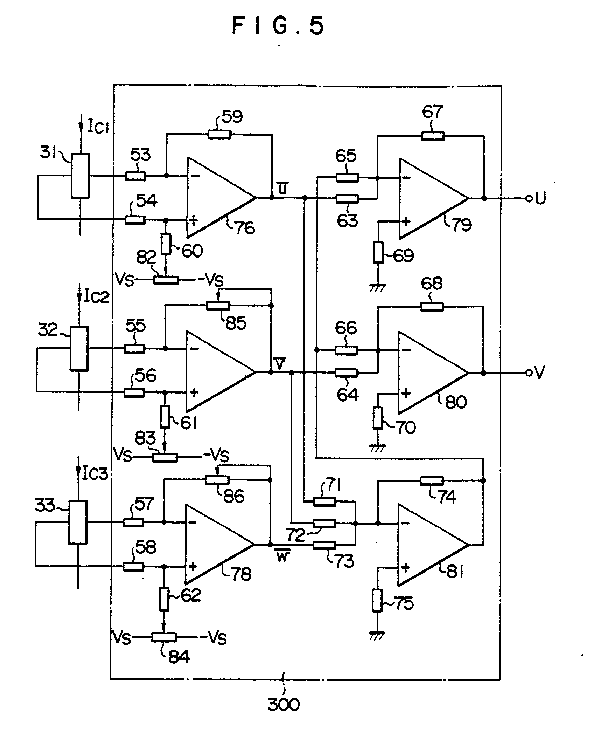

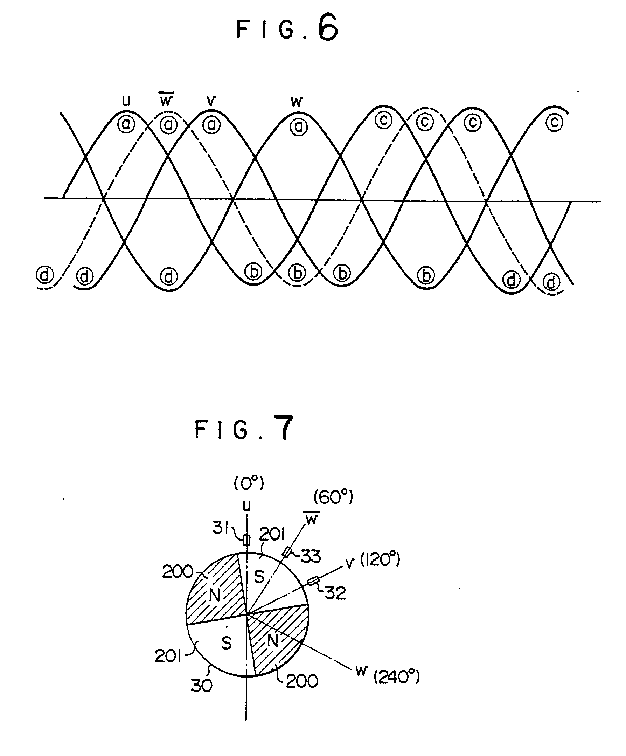

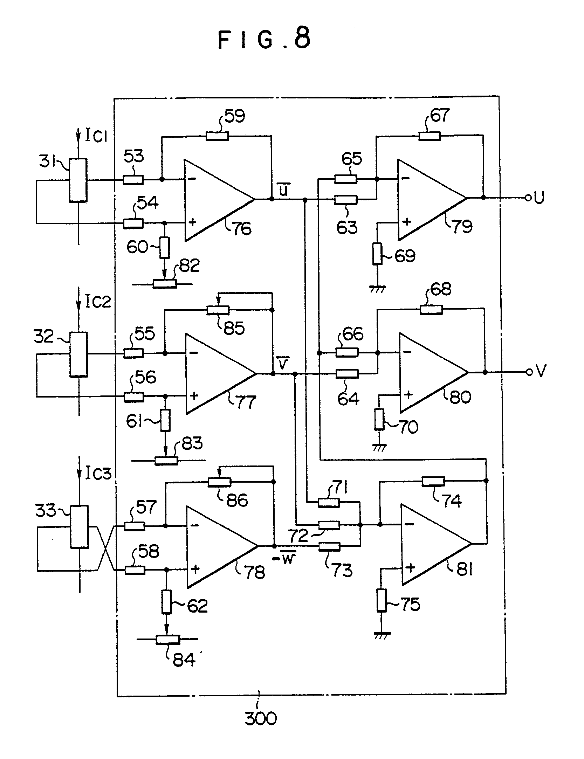

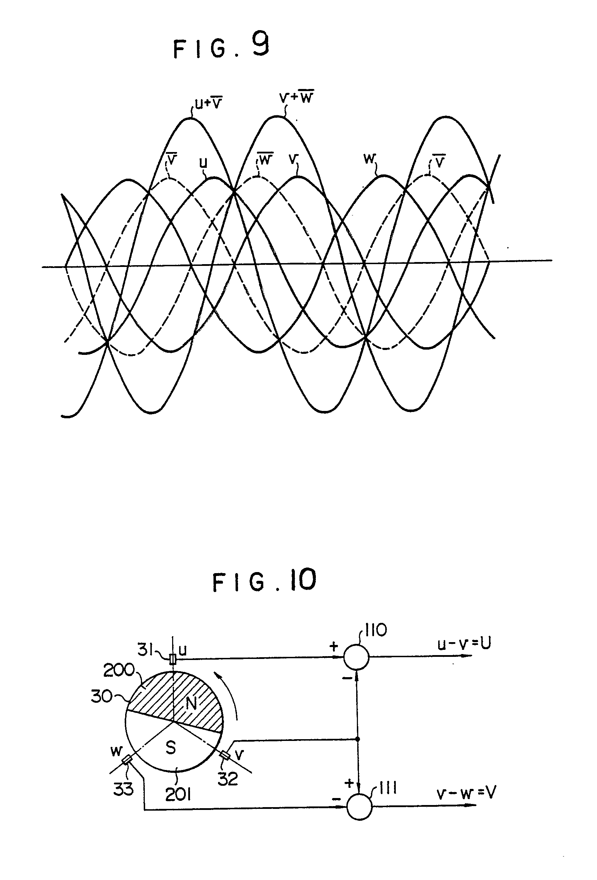

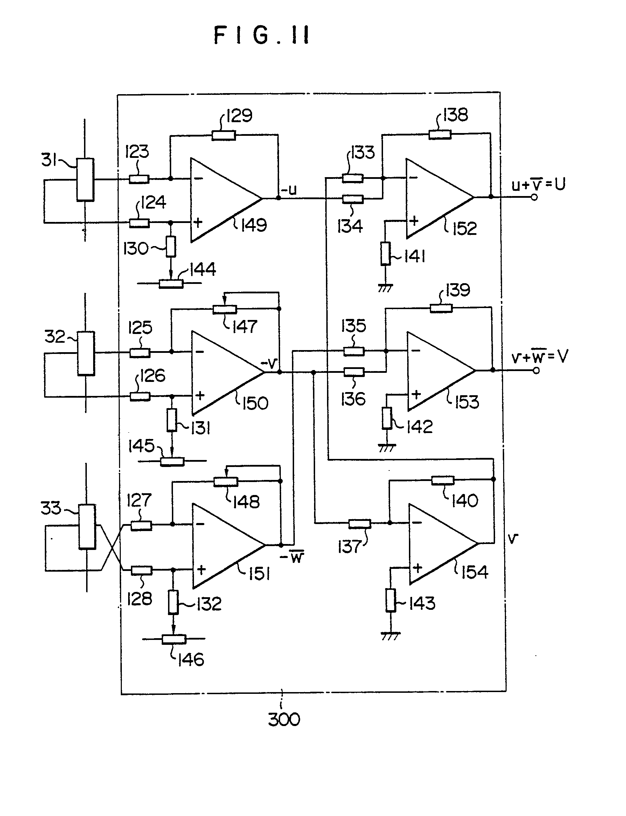

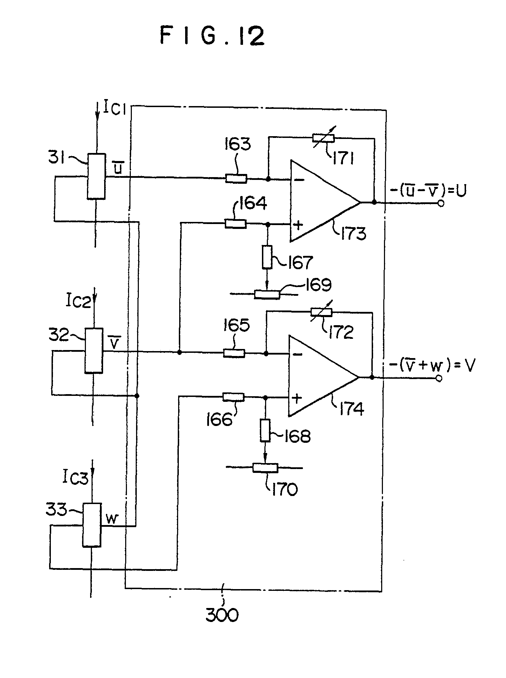

Fig. 1 shows an AC servomotor control circuit of the prior art. Fig. 2 shows magnet pole position detection signals when a magnetic pole position detecting magnet and Hall devices are used. Fig. 3 shows the principle of an apparatus according to the present invention. Figs. 4A and 4B show positional relationship between the magnetic pole position detecting magnet and the Hall devices. Fig. 5 shows a concrete embodiment of an apparatus according to the present invention. Fig. 6 shows another concrete embodiment of the apparatus according to the present invention. Fig. 7 shows magnetic pole detection signals. Fig. 8 shows the positional relationship between the magnetic pole position detecting magnet and the Hall devices in the present invention apparatus. Fig. 9 shows still another concrete embodiment of the present invention apparatus. Fig. 10 shows the waveform combination. Fig. 11 shows the principle of a variant of the present invention apparatus. Figs. 12 and 13 show other variants of the present invention apparatus.

Fig. 3 shows the principle of the present invention.

A rotary magnetic pole member 30 has a pair of poles composed of an N pole 200 and an S pole 201. Hall devices 31 to 33 are the first to the third signal generating means, each of which is confronted by the N pole or the S pole of the rotary magnetic pole member. Calculation means 300 is composed of comparator circuits 34 to 36 and a divide-by-three circuit 37.

The magnetic 30 has pole positions relatively aligned to the magnetic pole positions of the servomotor.

The magnetic flux of the magnet 30 is detected by the Hall devices 31 to 33. The Hall devices 31 to 33 are so located as to be displaced by 120° one another in electric angle and produce the u, v and w phases, respectively.

By adding the u, v and w phase detection signals in the comparator circuit 36, the fundamental component is eliminated and the third harmonic remains. Since the value of the third harmonic is three times that of one phase component, it is reduced to one third by the circuit 37. By subtracting the output signal of the circuit 37 from the detection signals of the u and v phases in the comparator circuits 34 and 35, waveforms with the third harmonics cancelled are obtained. These waveforms are taken out from the encoder as the U and V outputs.

Figs. 4A and 4B shows the relationship between the magnetic pole position detecting magnet and the Hall devices when the motor has two and four magnetic poles. The Hall devices are disposed at positions of 0°, 120° and 240° in electric angles. When the number of the magnetic poles is large, the Hall devices are disposed based upon the same concept.

Fig. 4A shows a case of two magnetic poles and Fig. 4B shows a case of four magnetic poles.

In case of a large number of magnetic poles, the Hall devices may be displaced by a multiple of 360° in electric angle.

Fig. 5 shows a concrete embodiment of the present invention. Resistors 53 to 75, operational amplifiers 76 to 81, and variable resistors 82 to 86 are included in the circuit of Fig. 5. $I_{c1}$ to $I_{c3}$ denote control currents of Hall devices.

The operational amplifier 76 amplifies the signal fed from a Hall device 31 in a differential mode to detect the u phase. In the same way, the operational amplifier detects the v phase and the operational amplifier 78 detects the w phase. Variable resistors 60, 61 and 62 are provided for zero level adjustment and variable resistors 85 and 86 are provided for gain adjustment. The signals of u, v and w phases are so adjusted as to have equal magnitudes and then added together in the operational amplifier 81.

If the resistors 71 to 73 have equal resistance values and the resistor 74 has a resistance value which is equal to one third of that of each of resistors 71 to 73, together by the operational amplifier 80 to produce the V phase signal with the third harmonic cancelled. The resistor 63 has a resistance value equal to that of the resistor 65. And the resistor 64 has a resistance value equal to that of the resistor 66.

In this embodiment, output with the third harmonic eliminated are derived as the U phase signal and the V phase signal. Accordingly, the W phase signal derived according to the relation $W = -(U+V)$ is free from the third harmonic, resulting in favorable servomotor control.

The embodiment of Fig. 6 is advantageous in that the circuit configuration is simple provided that the control current power sources of the Hall devices are insulated and isolated.

Fig. 6 shows waveforms of the u, v, w and $\overline{w}$ phases. In a magnet having a number of magnetic poles such as a magnet having four magnetic poles as illustrated in Fig. 4, it is difficult to make uniform the magnetization magnitude of respective poles, resulting in somewhat unevenness. In Fig. 7, portions ⓐ, ⓑ, ⓒ and ⓓ are respectively detected by receiving the magnetic flux from the same poles of the magnet, i.e., from the same pair of poles simultaneously. When the signal u+v+w is to be produced, the u and v phase signals belong to the portion ⓐ while the w phase signal belongs to the portion ⓓ, for example. In such a case, there occurs a difference between the voltage magnitudes. The $\bar{w}$ phase signal represented by a broken line of Fig. 6 as the output of the third signal generating means is not obtained by inverting the w phase but obtained from a Hall device located at a position $\bar{w}$. Fig. 7 shows how the hall device for detecting $\bar{w}$ is located. The hall device is fixed at a position of 60° between the first signal generating means 31 and the second signal generating means 32. When the u and v phase signals belong to the portion ⓐ in this case, the $\bar{w}$ phase signal also belongs to the portion ⓐ. When addition is conducted in accordance with an expression

$$u+v-\bar{w}=u+v+w,$$

therefore, the signals detected near the same pole are added together. In this case, therefore, the error in the fundamental frequency is advantageously reduced as compared with the u, v and w locations disposed at an interval of 120°.

Fig. 8 shows the detection circuit corresponding to the configuration of Fig. 7. The configuration of Fig. 8 is the same as that of Fig. 5 excepting a $\bar{w}$ phase detection circuit. Due to the difference in the location of the Hall device, the output voltage of the Hall device of the $\bar{w}$ phase is opposite in polarity to that of the Hall device of the w phase illustrated in Fig. 5. Therefore, inputs to the operational amplifier 78 for differential amplification are inverted. Other parts of Fig. 9 are the same as those of Fig. 5.

In Fig. 9 u+$\bar{v}$ and v+$\bar{w}$ are used to cancel the third harmonic. Signals $\bar{u}$, $\bar{v}$ and $\bar{w}$ represent signals obtained by inverting the signals u, v and w. By adding signals obtained by inverting u, v and w, their respective third harmonics are inverted in polarity and added together to be cancelled. Although there is a phase difference of 120° between signals u+$\bar{v}$ and v+$\bar{w}$, signals u+$\bar{v}$ and v+$\bar{w}$ lead in phase by 30° with respect to the u and v phases, respectively. Therefore, it is possible to make the encoder output signals U and V coincident with the magnetic pole positions of the motor relatively by 30° or by displacing the locations of the Hall devices by 30° in the opposite direction.

Fig. 10 shows the principle for realizing the method illustrated in Fig. 9. Reference numerals 110 and 111 denote comparator circuits. Signals detected by the Hall devices 31 and 32 are supplied to a comparator circuit 110 to produce the U phase signal represented as u−v. And signals detected by the Hall devices 32 and 33 are supplied to a comparator circuit 111 to produce the V phase signal represented as v−w.

Fig. 11 shows a concrete embodiment of the present invention. Resistors 123 to 143, variable resistors 144 to 148, and operational amplifiers 149 to 154 are included in the circuit of Fig. 12. The −u, −v, −$\bar{w}$ phase signals are detected by the operational amplifiers 149, 150 and 151. The signal u+$\bar{v}$ is sent out from the operational amplifier 152 as the U phase signal. The signal v+$\bar{w}$ is sent out from the operational amplifier 153 as the V phase signal.

The variable resistors 144 to 146 are provided for zero level adjustment. The variable resistors 147 and 148 are provided for gain adjustment.

Fig. 12 shows an embodiment in which the Hall device voltage outputs are coupled in series to reduce the number of operational amplifiers.

Resistors 163 and 168, variable resistors 170 to 172, and operational amplifiers 173 and 174 are included in the embodiment of Fig. 13.

The $\bar{u}$, $\bar{v}$ and w phase signals are detected by the Hall devices 31, 32 and 33, respectively. The operational amplifier 173 sends out the signal

$$-(\bar{u}-\bar{v})=u+\bar{v}$$

as the U phase signal. The signal

$$-(\bar{v}+w)=v+\bar{w}$$

as the V phase signal.

The embodiment of Fig. 12 has an advantage of simple circuit configuration provided that the power sources for letting flow the control currents through the Hall devices 31 to 33 are respectively isolated and insulated.

Even when the number of poles is large, this embodiment can be used. In addition, the problem as to the magnitude of the waveform described with reference to Figs. 6 and 7 is solved in the same way.

In the embodiments, Hall devices are used for detecting the magnetic flux. However, it is evident that any means capable of detecting the magnetic flux such as search coils disposed so as to be confronted by the magnetic poles may be used instead of the Hall devices.

**Claims**

1. An AC signal generating apparatus comprising:

a rotary magnetic pole member (30) including an N pole (200) and an S pole (201);

first to third signal generating means (31, 32 and 33), responsive to magnetic flux supplied from said rotary magnetic member, for generating AC electric signals (u, v, w) having an electric phase difference of $\pi/3 \cdot n$ (n=1 or 2) one another; and

calculation means (300) receiving said AC electric signals for calculating said AC electric signals to produce a first phase signal (U) and a second phase signal (V); characterized in that

said calculation means provides said first (U) and second (V) phase signals by computing linear combinations of the outputs of said first to third signal generating means, which suppress the third harmonic component.

2. An AC signal generating apparatus according to claim 1, wherein said calculation means (300) subtracts one third of the sum of outputs (u, v, w) of said first to third signal generating means from the output (u) of said first signal generating means (31) to send out said first phase signal (U) and subtracts one third of said sum from the output (v) of said second signal generating means (32) to send out said second phase signal (V).

3. An AC signal generating apparatus according to claim 1, wherein said first to third signal generating means (31, 32 and 33) are disposed around said rotary magnetic pole member (30) so that said first to third signal generating means simultaneously receive magnetic flux from a pair of said N pole (200) and S pole (201) and said third signal generating means (33) produces a signal ($\overline{w}$) having an electrical lag phase of $\pi/3$ with respect to the output of said first signal generating means (31) and having an electrical lead phase of $\pi/3$ with respect to the output of said second signal generating means (32), and wherein said calculating means (300) calculates said third harmonic component by subtracting the output ($\overline{w}$) of said third signal generating means (33) from the sum of the output (u) of said first signal generating means (31) and the output (v) of said second signal generating means (32), and subtracts said difference (u+v−$\overline{w}$) from the output (u) of said first signal generating means (31) to send out said first phase signal (U) and subtracts said difference (u+v−$\overline{w}$) from the output of said second signal generating means (32) to send out said second phase signal (V).

4. An AC signal generating apparatus according to claim 1, wherein said first to third signal generating means (31, 32 and 33) are so disposed around said rotary magnetic pole member (30) as to generate AC electric signals having an electrical phase difference of $2\pi/3$ one another, and wherein said calculation means (300) calculates said first phase signal (U) by subtraction operation between the first (u) and second (v) outputs of said first to third signal generating means and said second phase signal (V) by subtraction operation between the second (v) and third (w) outputs of said first to third signal generating means.

5. An AC signal generating apparatus according to claim 1, wherein said first to third signal generating means (31, 32 and 33) are disposed around said rotary magnetic pole member (30) so that said first to third signal generating means may simultaneously receive magnetic flux from a pair of said N pole (200) and S pole (201) and said third signal generating means (33) produces a signal (w) having an electrical lag phase of $\pi/3$ with respect to the output of said first signal generating means (31) and having an electrical lead phase of $\pi/3$ with respect to the output of said second signal generating means (32), and wherein said calculation means (300) sends out said first phase signal (U) depending upon the difference ($\overline{u}$−$\overline{v}$) of the output ($\overline{u}$) of said first signal generating means (31) and the output ($\overline{v}$) of said second signal generating means (32) and sends out said second phase signal (V) depending upon the sum ($\overline{v}$+w) of the output ($\overline{v}$) of said second signal generating means (32) and the output (w) of said third signal generating means (33).

**Patentansprüche**

1. Wechselstromsignalgenerator mit
einem sich drehenden Magnetpolglied (30), das einen Nordpol (200) und einen Südpol (201) aufweist,
einer ersten bis dritten Signalgeneratoreinrichtung (31, 32 und 33), die auf den vom rotierenden Magnetpolglied erzeugten magnetischen Fluß ansprechen und elektrische Wechselstromsignale (u, v, w) erzeugen, die gegeneinander um $\pi/3 \cdot n$ (n=1 oder 2) phasenversetzt sind; und
einer Recheneinrichtung (300), die durch rechnerische Verknüpfung der Wechselstromsignale ein erstes Phasensignal (U) und ein zweites Phasensignal (V) erzeugt, dadurch gekennzeichnet, daß
die Recheneinrichtung das erste (U) und das zweite (V) Phasensignal durch Berechnung linearer Verknüpfungen der Ausgangssignale der ersten bis dritten Signalgeneratoreinrichtung erzeugt, die die dritte harmonische Komponente unterdrücken.

2. Wechselstromsignalgenerator nach Anspruch 1, dadurch gekennzeichnet, daß die Recheneinrichtung (300) ein Drittel der Summe der Ausgangssignale (u, v, w) der ersten bis dritten Signalgeneratoreinrichtung von dem Ausgangssignal (u) der ersten Signalgeneratoreinrichtung (31) subtrahiert, um das erste Phasensignal (U) auszusenden und ein Drittel der Summe vom Ausgangssignal (v) der zweiten Signalgeneratoreinrichtung (32) subtrahiert, um das zweite Phasensignal (V) auszusenden.

3. Wechselstromsignalgenerator nach Anspruch 1, dadurch gekennzeichnet, daß die erste bis dritte Signalgeneratoreinrichtung (31, 32 und 33) um das rotierende Magnetpolglied (30) herum so angeordnet sind, daß die erste bis dritte Signalgeneratoreinrichtung gleichzeitig magnetischen Fluß von einem Paar des Nordpols (200) und des Südpols (201) empfangen und die dritte Signalgeneratoreinrichtung (33) ein Signal ($\overline{w}$) erzeugt, dessen Phase bezüglich des Ausgangssignals der ersten Signalgeneratoreinrichtung (31) um $\pi/3$ nacheilt und dessen Phase dem Ausgangssignal der zweiten Signalgeneratoreinrichtung (32) um $\pi/3$ vorauseilt, und daß die Recheneinrichtung (300) die dritte harmonische Komponente durch Subtraktion des Ausgangssignals ($\overline{w}$) der dritten Signalgeneratoreinrichtung (33) von der Summe des Ausgangssignals (u) der ersten Signalgeneratoreinrichtung (31) und des Ausgangssignals (v) der zweiten Signalgeneratoreinrichtung (32) berechnet und diese Differenz (u+v−$\bar{\text{w}}$) zur Bildung des ersten Phasensignals (U) von dem Ausgang (u) der ersten Signalgeneratoreinrichtung (31) subtrahiert und die genannte Differenz (u+v−$\bar{\text{w}}$) zur Bildung des zweiten Phasensignals (V) von dem Ausgangssignal der zweiten Signalgeneratoreinrichtung (32) subtrahiert.

4. Wechselstromsignalgenerator nach Anspruch 1, dadurch gekennzeichnet, daß die erste bis dritte Signalgeneratoreinrichtung (31, 32 und 33) so um das rotierende Magnetpolglied (30) herum angeordnet sind, daß sie elektrische Wechselstromsignale erzeugen, die gegeneinander um 2π/3 phasenversetzt sind, und daß die Recheneinrichtung (300) das erste Phasensignal (U) durch eine Subtraktion zwischen dem ersten (u) und dem zweiten (v) Ausgangssignal der ersten bis dritten Signalgeneratoreinrichtung und das zweite Phasensignal (V) durch subtraktion zwischen dem zweiten (v) und dritten (w) Ausgangssignal der ersten bis dritten Signalgeneratoreinrichtung berechnet.

5. Wechselstromsignalgenerator nach Anspruch 1, dadurch gekennzeichnet, daß die erste bis dritte Signalgeneratoreinrichtung (31, 32 und 33) so um das rotierende Magnetpolglied (30) herum angeordnet sind, daß die erste bis dritte Signalgeneratoreinrichtung gleichzeitig magnetischen Fluß von einem Paar des Nordpols (200) und des Südpols (201) empfangen und die dritte Signalgeneratoreinrichtung (33) ein Signal (w) erzeugt, dessen Phase um π/3 gegenüber dem Ausgangssignal der ersten Signalgeneratoreinrichtung (31) nacheilt und dessen Phase um π/3 gegenüber dem Ausgangssignal der zweiten Signalgeneratoreinrichtung (32) voreilt, und daß die Recheneinrichtung (300) das erste Phasensignal (U) anhängig von der Differenz ($\bar{\text{u}}$−$\bar{\text{v}}$) des Ausgangssignals ($\bar{\text{u}}$) der ersten Signalgeneratoreinrichtung (31) und des Ausgangssignals ($\bar{\text{v}}$) der zweiten Signalgeneratoreinrichtung (32) bildet und das zweite Phasensignal (V) abhängig von der Summe ($\bar{\text{v}}$+w) des Ausgangssignals ($\bar{\text{v}}$) der zweiten Signalgeneratoreinrichtung (32) und des Ausgangssignals (w) der dritten Signalgeneratoreinrichtung (33) bildet.

**Revendications**

1. Dispositif de production d'un signal à courant alternatif, comprenant:

un élément rotatif à pôles magnétiques (30) incluant un pôle N (200) et un pôle S (201);

des premiers, seconds et troisièmes moyens de production de signaux (31, 32, 33) sensibles à un flux magnétique envoyé par ledit élément magnétique rotatif pour produire des signaux électriques à courant alternatif (u, v, w) présentant entre eux un déphasage électrique égal à π/3 · n (n=1 ou 2); et

des moyens de calcul (300) recevant lesdits signaux électriques à courant alternatif pour calculer lesdits signaux électriques à courant alternatif servant à produire un premier signal de phase (U) et un second signal de phase (V); caractérisé en ce que

lesdits moyens de calcul fournissent ledit premier signal de phase (U) et ledit second signal de phase (V) au moyen du calcul de combinaisons linéaires des signaux de sortie desdits premiers, seconds et troisièmes moyens de production de signaux, qui suppriment la troisième composante harmonique.

2. Dispositif de production de signaux à courant alternatif selon la revendication 1, dans lequel lesdits moyens de calcul (300) soustraient le tiers de la somme des signaux de sortie (u, v, w) desdits premiers, seconds et troisièmes moyens de production de signaux, du signal de sortie (u) desdits premiers moyens (31) de production de signaux pour délivrer ledit premier signal de phase (U) et soustraient le tiers de ladite somme du signal de sortie (v) desdits seconds moyens de production de signaux (32) pour délivrer ledit second signal de phase (V).

3. Dispositif de production de signaux à courant alternatif selon la revendication 1, dans lequel lesdits premiers, seconds et troisièmes moyens (31, 32 et 33) de production de signaux sont disposés autour dudit élément rotatif à pôles magnétiques (30) de sorte que lesdits premiers, seconds et troisièmes moyens de production de signaux reçoivent simultanément un flux magnétique depuis un couple formé par ledit pôle N (200) et ledit pôle S (201), et lesdits troisièmes moyens (33) de production de signaux produisent un signal ($\bar{\text{w}}$) possédant un retard de phase électrique égal à π/3 par rapport au signal de sortie desdits premiers moyens (31) de production de signaux et une avance de phase électrique égale à π/3 par rapport au signal de sortie desdits seconds moyens (32) de production de signaux, et dans lequel lesdits moyens de calcul (300) calculent ladite troisième composante harmonique en soustrayant le signal de sortie ($\bar{\text{w}}$) desdits troisièmes moyens (33) de production de signaux de la somme du signal de sortie (u) desdits troisièmes moyens (31) de production de signaux et du signal de sortie (v) desdits seconds moyens (32) de production de signaux, et soustraient ladite différence (u+v−$\bar{\text{w}}$) du signal de sortie (u) desdits premiers moyens (31) de production de signaux de manière à délivrer ledit premier signal de phase (U) et à soustraire ladite différence (u+v−$\bar{\text{w}}$) du signal de sortie desdits seconds moyens (32) de production de signaux pour délivrer ledit second signal de phase (V).

4. Dispositif de production de signaux à courant alternatif selon la revendication 1, dans lequel lesdits premiers, seconds et troisièmes moyens (31, 32 et 33) de production de signaux sont disposés autour dudit élément rotatif à pôles magnétiques (30) de manière à produire des signaux électriques à courant alternatif possédant des différences de phase électrique égales à 2π/3 les uns par rapport aux autres, et dans lequel lesdits moyens de calcul (300) calculent ledit premier signal de phase (U) au moyen d'une opération de soustraction entre le premier signal de sortie (u) et le second signal de sortie (v) desdits premiers, seconds et troisièmes moyens de production de signaux, et ledit second signal de phase (V) au moyen d'une opération de soustraction entre le second signal de sortie (v) et le troisième signal de sortie (w) desdits premiers, seconds et troisièmes moyens de production de signaux.

5. Dispositif de production de signaux à courant alternatif selon la revendication 1, dans lequel lesdits premiers, seconds et troisièmes moyens (31, 32, 33) de production de signaux sont disposés autour dudit élément rotatif à pôles magnétiques (30) de sorte que lesdits premiers, seconds et troisièmes moyens de production de signaux peuvent recevoir simultanément un flux magnétique provenant d'un couple incluant ledit pôle N (200) et ledit pôle S (201), et lesdits troisièmes moyens (33) de production de signaux produisent un signal (w) possédant un retard de phase électrique égal à π/3 par rapport au signal de sortie desdits premiers moyens (31) de production de signaux et une avance de phase électrique égale à π/3 par rapport au signal de sortie desdits seconds moyens (32) de production de signaux, et dans lequel lesdits moyens de calcul (300) délivrent ledit premier signal de phase (U) en fonction de la différence $(\overline{u}-\overline{v})$ entre le signal de sortie $(\overline{u})$ desdits premiers moyens (31) de production de signaux et un signal de sortie $(\overline{v})$ desdits seconds moyens (32) de production de signaux, et délivrent ledit second signal de phase (V) en fonction de la somme $(\overline{v}+w)$ du signal de sortie $(\overline{v})$ desdits seconds moyens (32) de production de signaux et du signal de sortie (w) desdits troisièmes moyens (33) de production de signaux.

FIG. 1

# FIG.2

U    t

V    t

W    t

# F I G . 3

# F I G . 4A

# F I G . 4B

EP 0 184 860 B1

F I G . 5

300

4

# F I G . 6

# F I G . 7

# F I G . 8

300

# F I G . 9

# F I G . 10

FIG. 11

F I G . 12